# EUROPEAN PATENT SPECIFICATION

(11) **EP 1 665 579 B1**
(45) Date of publication and mention of the grant of the patent: **10.02.2010**
(21) Application number: 04775386.8
(22) Date of filing: 06.09.2004
(51) Int. Cl.: H04B 7/005, H04L 29/06, H04L 1/00

(54) **METHOD AND SYSTEM FOR UNEVEN DISTRIBUTION OF DATA**
VERFAHREN UND SYSTEM FÜR UNGLEICHMÄSSIGE VERTEILUNG VON DATEN
PROCEDE ET DISPOSITIF DE DISTRIBUTION NON UNIFORME DE DONNEES

(30) Priority: 10.09.2003 SE 0302429
(43) Date of publication of application: 07.06.2006
(73) Proprietor: TELIASONERA AB, 106 63 Stockholm (SE)
(72) Inventor: DAHLEN, Anders, S-133 41 Saltsjöbaden (SE)
(74) Representative: Hopfgarten, Nils
(86) International application number: PCT/SE2004/001281
(87) International publication number: WO 2005/025084

(56) References cited:
- EP-A1- 1 271 831
- MUN CHOON CHAN ET AL.: 'TCP/IP Performance over 3G Wireless Linka with Rate and Delay Variation' MOBICOM'02 23 September 2002 - 28 September 2002, pages 71 - 82, XP001171457
- BALAKRISHNAN H. ET AL.: 'A Comparison of Mechanisms for Improving TCP Performance over Wireless Links' IEEE/ACM TRANSACTIONS ON NETWORKING vol. 5, no. 6, December 1997, pages 756 - 769, XP000734405 & DATABASE INSPEC [Online] Database accession no. 5827708
- FAHMY S. ET AL.: 'TCP over Wireless Links: Mechnisms and Implications' TECHNICAL REPORT CSDTR-03-004 24 February 2003, pages 1 - 13, XP002903854
- ZHANG N. ET AL.: 'Simulation-based investigation of TCP file transfers over UMTS' LONDON COMMUNICATIONS SYMPOSIUM 08 September 2003 - 09 September 2003, 4 PAGES, XP002903855

## Description

### FIELD OF THE INVENTION

The present invention relates in general to Transport Control Protocol, TCP, used for reliable data transfers over the Internet, more particular to BLER management of radio bearers for TCP traffic.

### BACKGROUND

The Transport Control Protocol (TCP) is the most commonly used protocol for reliable data transfers over the Internet. TCP provides a reliable connection-oriented service that many popular applications (such as http, ftp, and email) utilize. However, TCP has been shown to give a poor average throughput over 3G systems. See "Mobile Internet - Performance Issues Beyond the Radio Interface", Joachim Sachs, 10th Aachen Symposium on Signal Theory, Sep 2001, and "Analytical model for file transfer over UMTS", Janne Peisa, et. Al, Proceedings 3G Wireless 2001, San Francisco, May-June 2001.

"Error-rate Management in wireless systems", Wen-Yi Kuo, US 2002/0191564, describes a different BLER management method. The BLER target is set high if the radio block is retransmitted for the first time. When a radio block is retransmitted the BLER target is set low(-er). This will reduce the number of retransmissions and hence the RTT. However, during the TCP initial slow start phase or TCP congestion recovery phase no retransmissions at all are preferable because even one retransmission adds about 100 ms on RTT. One problem with this method might be that each TTI will include retransmitted radio blocks and hence one would like to send each TTI with low BLER target. The result will then be a continuously low BLER transmission. The procedure continues to upgrade and downgrade the BLER target even after maximal bit rate has been reached, during which unnecessarily high transmission power is used.

In "Multi-state power control mechanism for wireless communication system", F. Ulupinar et. al, WO 02/07340, a FER target management method is described. It is designed as an outer-outer loop power control. If data rate control information is not received correctly the method enable to reduce the FER target. Periodically the FER target is increased to check if a higher FER can be used. The aim of this procedure is to transmit at as low power as possible, but without introducing too much data rate control information loss. During the TCP initial slow start phase or TCP congestion recovery phase no radio link retransmissions at all are preferable. The method may give a low power usage, but a poor TCP throughput.

"Rate Control System of TCP Layer", K. Nishimura, EP 1061699 A1, describes a modification of the TCP layer to prevent that TCP congestion control is activated when transferring data from one terminal to another. It does not include any BLER management method or other power control procedure. Instead it reduces the negative effect of TCP congestion control, if it occurs, and the initial slow start phase.

A scheme that gives a high bit rate with low power is described in "Method, Apparatus, and System for optimising transmission power and bit rate in multi-transmission scheme communication systems", A. Khullar, US 2002/0154611. An appropriate modulation and coding rate is selected. Changing the BLER target does not affect the selection of modulation or coding rate, or vice versa. The modulation and coding rate determines the maximal bit rate of the radio link. If varying them during a file transfer, the maximal bit rate of the radio link will then vary. The RTT is essentially not affected and, hence, the TCP throughput is not improved.

The procedure in "Method and apparatus for minimizing total transmission energy in communication system by using channel quality", L. Razoumov, WO 01/28127 is a method of selecting the transmission power given a FER target. Some procedure that maps FER target or BLER target to a certain power level is needed in the system. A low BLER target requires a high power whereas a high BLER target allows the usage of a lower power. The BLER or FER target gives a guideline of appropriate power level and a target of a long-term error rate of radio blocks or frames.

A method to control the transmit power is described in " Power control for a channel with multiple formats in a communication system", Da-shan Shiu et. al US 2003/0036403. The power control procedure should then give an average BLER close to the BLER target.

In 3G the idea is to primarily use high error ratio of the radio blocks for TCP traffic. The radio block errors are corrected through retransmissions over the radio link. The usage of high BLER radio channels is very attractive, since radio links with high BLER consumes much less power than radio links with low BLER. Thus a high BLER allows for more simultaneous users per base station, i.e., the capacity becomes higher. The capacity is approximately doubled when increasing the BLER target from 1% to 10%; with huge implications on the UMTS network costs for the same capacity. The downside of high error rate radio links is that it has implications for the performance of connections using TCP.

The poor TCP performance is due to large delays in the radio access network. A formula for the end-to-end RTT, round trip time, over UMTS is given in "Analytical model for file transfer over UMTS", Janne Peisa, Michael Meyer, Proceedings 3G Wireless 2001, San Francisco, May-June 2001. The formula indicates that the radio bearer's BLER target affects the average RTT to a high extent. Somewhat simplified the formula can be written RTTend-to-end = k*RTTRLC +2*(Internet delay)+(Radio transmission delay), where k is a constant depending on the BLER target. For 10% BLER k is 3 and for 1% BLER k is about 1.5. Thus, a high BLER target gives many radio link retransmissions and each retransmission, RTTRLC, takes about 100 ms. The Internet delay is usually 10-50 ms and the radio transmission of a 1500 bytes packet over a 384 kbps radio link is about 30 ms. Thus, the formula indicates that the RTT can be reduced approximately 35% by using 1% BLER target instead of 10% BLER target.

### SUMMARY OF THE INVENTION

The present invention relates in general to TCP used for reliable data transfers over the Internet, more particular to BLER management of radio bearers for TCP traffic.

The BLER target management method improves TCP performance under efficient radio resource utilization. The BLER target is set low (1%) to help TCP to accelerate until the maximum bit rate of the radio bearer has been reached. Then the BLER target is set to a high value (10%).

One object with the present invention is to keep a constant BLER target independently if the radio block is retransmitted or transmitted for the first time. It starts with a low BLER target to shorten the RTT during the time that the RTT value matters to the throughput performance. As soon as a short RTT does not improve the throughput performance any more the BLER target is changed to a high value. This high value is used for the rest of the transmission, for both retransmitted and first transmission blocks, unless throughput drops and needs to accelerate again. As soon as a short RTT does not improve the throughput performance any more the BLER target is changed to a high value.

One advantage with the present invention is that it increases the capacity. Hence, it reduces costs.

Another advantage is to keep the number of radio link retransmissions low.

Another advantage is that the method does not modify TCP, and it does not prevent TCP congestion control to be activated.

Another advantage is that one less BLER target change is needed.

Another advantage is that the combination low BLER target and high bit rate is avoided.

The problem of the present invention is solved by the features of the independent claims.

### BRIEF DESCRIPTION OF THE DRAWINGS

Figure 1 shows transmission of data packets between a sender and a receiver,
Figure 2 shows the TCP transfer rate during a data transfer,
Figure 3 shows a flowchart where a user changes from a low BLER target to higher BLER target,
Figure 4 shows a flowchart of previous procedure and where TCP congestion control is activated,
Figure 5 shows a flowchart of previous procedure where channel switching technique is used and TCP congestion control is activated,
Figure 6 shows a flowchart of previous procedure and where the channel switching technique is used and tried to allocate a higher BLER in the last channel-switching step,
Figure 7 shows a UMTS network performs closed loop power control at Node B and outer loop power control at the RNC.

### DETAILED DESCRIPTION

### Abbreviations

- ACK: Acknowledgment
- BER: Bit Error Ratio
- BLER: Block Error Ratio
- CN: Core Network
- CRC: Cyclic Redundancy Check
- DUPACK: Duplicate Acknowledgment
- EDGE: Enhanced Data rates for GSM Evolution
- FER: Frame Error Ratio
- FTP: File Transfer Protocol
- GPRS: General Packet Radio System
- GGSN: Gateway GPRS Support Node
- HTTP: Hypertext Transfer Protocol
- IETF: Internet Engineering Task Force
- IP: Internet Protocol
- kbps: kilo bits per second
- MAC: Medium Access Control
- MSS: Maximum Segment Size
- OVSF: Orthogonal Variable Spreading Factor
- PDU: Protocol Data Unit
- QoS: Quality of Service
- RAB: Radio Access Bearer
- RLC: Radio Link Control
- RNC: Radio Network Controller
- RTT: Round Trip Time
- RTO: Round trip Time-Out
- SGSN: Serving GPRS Support Node
- SIR: Signal to Interference Ratio
- TCP: Transmission Control Protocol
- TTI: Transmission Time Interval
- UMTS: Universal Mobile Telecommunication System
- UTRAN: Universal Terrestrial Radio Access Network
- WCDMA: Wideband CDMA, Code division multiple access
- WLAN: Wireless Local Area Network

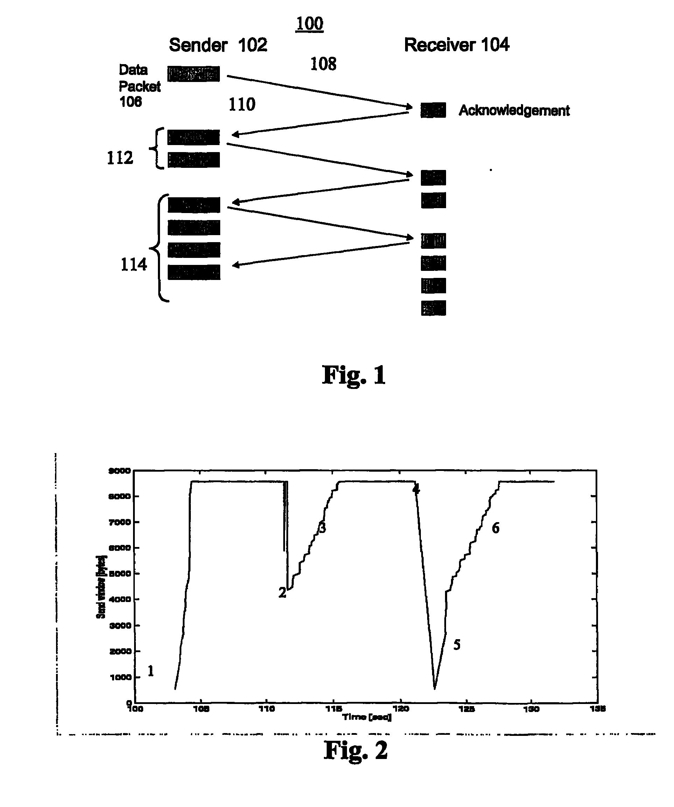

Figure 1 shows transmission of data packets 100 between a sender 102 and a receiver 104. The TCP performance depends on the RTT. TCP starts the transmission 108 of a data packet 106 with a low speed. This phase is called the initial slow start. TCP slow start starts typically by sending one IP packet 106. The receiver 104 receives the data packet 106 and sends an acknowledgement 110 to the sender 104. When the packet 106 has been acknowledged 110 it sends two packets 112. The round trip time, RTT, is the time from sending a packet and receiving an acknowledgment. TCP continues to send two new packets 114 for each received acknowledgement. This gives an exponential growth of the transfer rate until the maximal bit rate is reached. The growth depends on the RTT, the higher RTT the slower increase.

The low BLER value reduces the number of radio link retransmissions and, hence, reduces the end-to-end RTT.

If TCP congestion control is activated, TCP reduces the speed again. A so-called fast retransmission halves the speed and the transfer rate increases linearly. The slope of the linear increase is less steep with a high RTT. When TCP timeout is activated TCP reduces the transfer rate even more drastically. In this case, the speed is increased exponentially until half of the speed used when the timeout was activated has been reached. Thereafter the transfer rate is increased linearly, see Figure 2. Note that a high BLER target does not normally activate TCP congestion control if in-sequence delivery is used at the RLC layer. It is mostly packet losses over Internet or coverage holes in the 3G networks that triggers TCP retransmissions and congestion control. (See for example "Internetworking with TCP/IP - Volume 1: Principles, Protocols, and Architectures" (4th edition), Douglas E. Comer, Prentice Hall, 2000, for more information about TCP.)

Figure 2, the TCP transfer rate varies during a data transfer. The y-axis is the TCP send window, which approximately can be interpreted as a transfer rate where the horizontal line on top is the maximal bit rate of the radio link. The different events or states of TCP are:
1. initial slow start;
2. fast retransmission event;
3. congestion avoidance window recovery after a fast retransmission;
4. timeout event;
5. slow start recovery after a timeout;
6. congestion avoidance after the slow start recovery.

The low throughput leads to unsatisfied customers and inefficient use of radio resources. Maximization of the utilization of an access point is of greatest importance due to cost issues. In UMTS dedicated radio links are used. This means that radio resources, such as Orthogonal Variable Spreading factor, OVSF, codes, are allocated to the user. A low bit rate implies that the OVSF codes are allocated to each user for a longer time and this may prohibit other users to get access if there are not enough OVSF code resources left. Hence, it affects the ability of serving many users. Moreover, since fewer bits will be transferred in the air the cell throughput will be poor and, hence, the profit per base station might be unacceptable.

One technique that is used today to improve the performance and there by increase the efficiency of the OSVF code usage is to consistently set the BLER target low (1%) instead of using a high (10%) BLER target. Thus the lower error ratio is used for all TCP traffic at all times. This reduces the RTT and helps TCP to faster reach the maximum bit rate of the radio bearer. However, it also leads to drastic reduction of capacity, since the data transmission is performed with higher power. The higher transmission power also implies that the battery resources in the terminal are emptied faster.

In Ericsson's WCDMA P2.1, a channel switching system is implemented. This system implies that the user always gets 64 kbps initially. When the actual transfer rate has reached the radio links maximal bit rate, a radio link switch to 128 kbps is done. A 384 kbps radio link is allocated to the user when the transfer rate has reached 128 kbps. This channel switching system makes the utilization of the OVSF codes more efficient, especially for small file transfers. However, a web surfer will probably experience the Internet connection as slow if the channel switching technique is used together with 10 % BLER target, since the transfer rate of TCP will increase slower if the channel switching system is used instead of applying 384 kbps at once. The reason for this is that the RTT of 64 and 128 kbps radio links are longer than the RTT of a 384 kbps channel. Moreover, there will be some delay when switching channel.

It is also possible to use split TCP to improve TCP performance. (see e.g. "Performance Evaluation of a TCP Proxy in WCDMA Networks", M. Meyer, J. Sachs, M. Holzke. To be published in IEEE Wireless Communication Magazine, 2003)

The BLER target management method in the present invention improves TCP performance under efficient radio resource utilization. It helps TCP to accelerate until the maximum bit rate of the radio bearer has been reached.

### Method

A low BLER (typically 1 %) gives a lower RTT and helps TCP to accelerate. When TCP sends at the maximal bit rate of the radio link there is no reason to continue to use the low bit rate, a higher BLER target (typically 10%) should be used. A change in the BLER target implies a radio bearer switch.

This means that a low BLER radio link is used only when TCP needs to accelerate and the time when low BLER is used is minimized. Low BLER demands transmission with higher power and reduces the capacity. Minimizing the time during which low BLER is used increases the capacity in the cell; one reduces the interference to the neighbouring cells and one reduces the battery consumption in the 3G terminals.

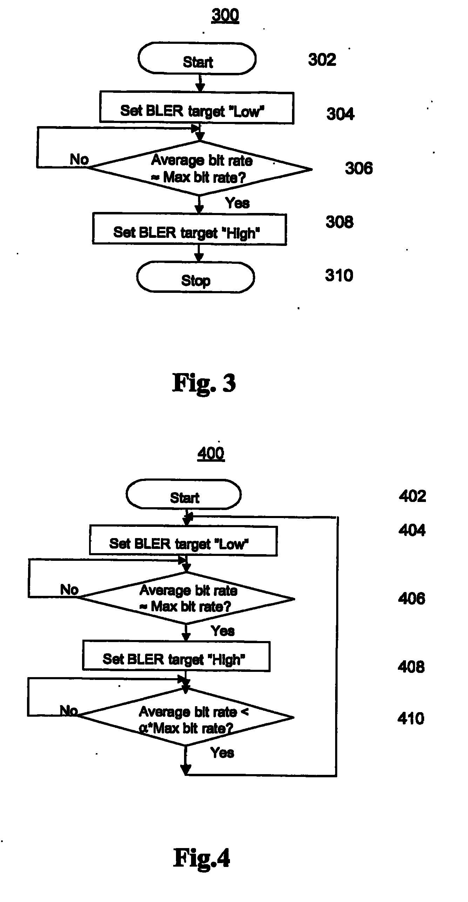

Figure 3 shows a first procedure where a user changes from a low BLER target to higher BLER target 300. The procedure starts 302 with a new user getting a 384 kbps radio link with 1% BLER target "Set BLER target "low"" 304. Check if the speed 384 kbps has been reached by TCP "Average bit rate ≈ Max bit rate?" 306. If the answer to question 306 is "No" back to question 306. If the answer to question 306 is "Yes" then the BLER target is changed to 10%, "Set BLER target "High" 308. The speed of the link remains 384 kbps. During the remaining file transfer this link is used.

Figure 4 shows a second and more advanced procedure 400, TCP congestion control is activated. The procedure starts 402 with a new user getting a 384 kbps radio link with 1% BLER target "Set BLER target "low"" 404. Check if the speed 384 kbps has been reached by TCP "Average bit rate ≈ Max bit rate?" 406. If the answer to question 406 is "No" back to question 406. If the answer question 406 is "Yes" a higher BLER target has been received "Set BLER target "high" 408. Thus after the BLER target has changed to high (10%) this BLER target is tried to be kept. Perform the check "Average bit rate < α* Max bit rate?" 410. If the answer to question 410 is "No" back to question 410. If the answer question 410 is "Yes" then "set BLER to Target "Low" 412 thereafter to question 406. If the TCP transmission rate drops the procedure helps the TCP to accelerate by changing back to a low BLER target (1%) until the radio links maximal bit rate is reached. This technique can of course be used independently of the radio links maximal bit rate.

The transmission rate over a radio link can for example be measured by registering the amount of bits that are transferred between the RLC and MAC layers in 0.5 sec intervals. This is done today in Ericsson's P2.1 WCDMA system to for example perform channel switching.

Since low BLER improves the average transmission rate for a user, it also improves the efficiency of the OSVF code usage. Moreover, the channel switching technique described earlier can even be used together with present invention, the BLER management technique. The channel switching improves coverage, and minimizes the time when the combination high bit rate and low BLER is demanded.

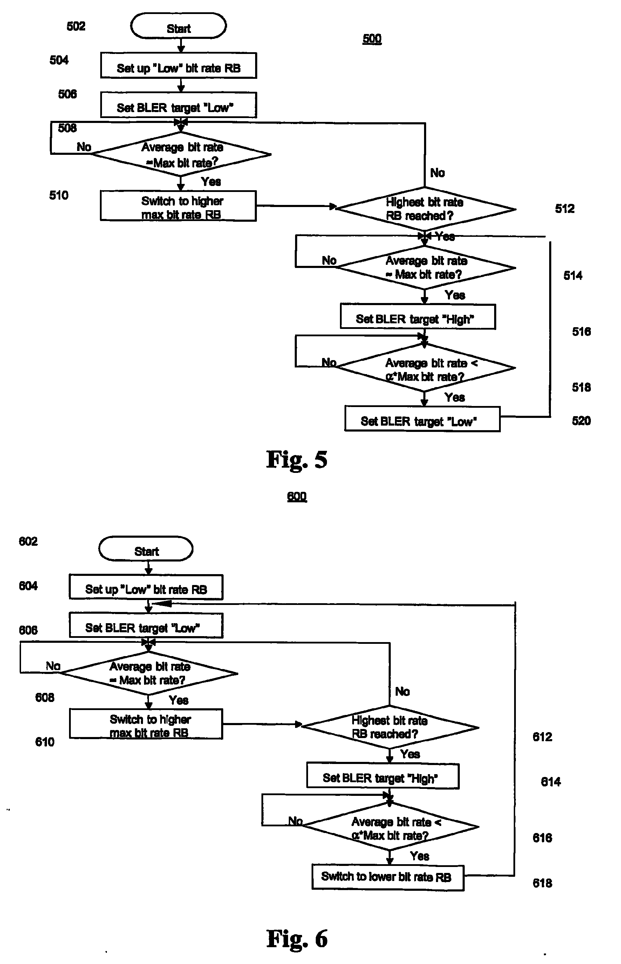

Figure 5 shows a third procedure 500, channel switching and TCP congestion control is activated. A user starts with 64 kbps and wants to reach 384 kbps. The procedure starts 502 with a new user getting a 64 kbps radio link "Setup "Low" bit rate RB" 504 and with 1% BLER target "Set BLER target "low"" 506. Check if the speed 64 kbps has been reached by TCP "Average bit rate ≈ Max bit rate?" 508. If the answer to question 508 is "No" back to question 508. If the answer question 508 is "Yes", 64 kbps has been reached, and a 128 kbps radio link with low (1%) BLER target is allocated to the user instead "Switch to higher max bit rate RB" 510. In this case the user has asked for 384 kbps. If the answer to question, "Highest bit rate RB reached?" 512 is "No" then go to question 508 "Average bit rate ≈ Max bit rate?", i.e., has 128 kbps been reached? If the answer to question 508 is "No" then back to question 508. If the answer to question 508 is "Yes" perform "Switch to higher max bit rate RB" 510. Thus a 384 kbps radio link with low (1%) BLER target is allocated as soon as 128 kbps transmission rate has been reached by TCP. Then if the answer to question 512 "Highest bit rate RB reached?" is "Yes", 384 kbps is the bit rate that the user has asked for or the maximal bit rate that the system provides. Check if the speed 384 kbps has been reached by TCP "Average bit rate ≈ Max bit rate?" 514. If the answer to question 514 is "No" back to question 514. If the answer to question 514 is "Yes" a higher BLER target has been received "Set BLER target "high" 516. Thus after the BLER target has changed to high (10%) this BLER target is tried to be kept. Check if "Average bit rate < α* Max bit rate?" 518 for some appropriate α < 1. If the answer to question 518 is "No" back to question 518. If the answer question 518 is "Yes" then "Set BLER to Target "Low" 520 thereafter to question 514.

Note that if admission control does not admit that a faster radio link with low BLER target is allocated, one can try to allocate a faster radio link with high BLER target instead. If not even that is accepted, keep the present bit rate but with high BLER target.

Figure 6 shows a fourth procedure 600, when the channel switching technique is used. This alternative always tries to allocate a higher BLER in the last channel-switching step. In procedure 3 this means that when switching from 128 kbps with 1 % BLER target to 384 kbps, a high BLER target is used together with the 384 kbps radio link directly. A user starts with 64 kbps and wants to reach 384 kbps. Starts 602 with a new user gets a 64 kbps radio link "Setup "Low" bit rate RB" 604 and with 1% BLER target "Set BLER target "low"" 606. Check if the speed 64 kbps has been reached by TCP "Average bit rate ≈ Max bit rate?" 608. If the answer to question 608 is "No" back to question 608. If the answer question 608 is "Yes", 64 kbps has been reached, a 128 kbps radio link with low (1%) BLER target is allocated to the user instead "Switch to higher max bit rate RB" 610. Check if "Highest bit rate RB reached?" 612. In this case the user has asked for 384 kbps. The answer to question 612 is "No" then go to question 608 "Average bit rate ≈ Max bit rate?", i.e., has 128 kbps been reached? If the answer to question 608 is "No" then back to question 608. If the answer to question 608 is "Yes" that 128 kbps has been reached by TCP, 384 kbps radio link is allocated "Switch to higher max bit rate RB" 610. Then if the answer to question 612 "Highest bit rate RB reached?" is "Yes", 384 kbps is the bit rate that the user has asked for or the maximal bit rate that the system provides the BLER target is set "Set BLER target "high" 614. Perform the check "Average bit rate < α* Max bit rate?" 616. If the answer to question 616 is "No" back to question 616. If the answer to question 616 is "Yes" then "Switch to lower bit rate RB" 618 and "set BLER target to "Low" 606.

One advantage with this is that one less BLER target change is needed. Another is that the combination low BLER target and high bit rate is avoided, which implies more capacity in the cell and less interference to neighbors' cells. If 128 kbps is the highest demanded or admitted bit rate in the cell the one switches from a lower bit rate radio link to a 128 kbps link with high BLER target.

Note that it is a measured average transmitted bit rate over the radio link that decides if a BLER target change should take place. If TCP sends at a lower rate than the radio links maximal bit rate then the system notices that there is not enough data to send at maximal bit rate continuously. Hence, data is transferred at maximal bit rate, and there are time intervals in which nothing is sent at all. When TCP reaches the maximal bit rate of the radio link, the buffers in the system is continuously fed with new data and the radio link's maximal bit rate can be utilized to 100%. The exchange from low to high BLER target can be done when one is "close" to sending at maximal speed, when the maximal speed is reached, or shortly after maximal speed of the radio link is reached.

Typical BLER target values that are used in UMTS are 0.1%, 1% and 10%. By low or high BLER target any value can be used, but preferably the 3G standard should support the choices. Of course, the low BLER should be lower than the high BLER, and to get a significant effect the difference between the low and the high value ought to be high. At the high BLER target the radio link retransmissions ought to be transparent to the TCP layer, so that TCP congestion control is not activated unnecessarily.

Note that channel switching can be carried out between other bit rates than the ones exemplified here. The BLER management method handles any other bit rates.

The BLER management described above is for the downlink radio channel under the assumption that data is downloaded to the mobile terminal. For the uplink only 64 kbps is available and, in case of a download, the uplink channel essentially only carries acknowledgements. Hence the uplink bandwidth is not the limiting factor. The optimal BLER management for the uplink channel is then to use the same BLER target as is selected for the downlink channel. In this way the probability of retransmitting data in the uplink is low during the RTT critical time. This means that a new BLER target has to be sent from the RNC to the terminal. A simpler way is to always use 10% BLER target in the uplink, to save capacity and battery consumption, or to always set the BLER target to 1%, to help TCP accelerate.

If data is uploaded then the BLER management method above should be applied on the uplink channel. Hence, a low BLER target should be initially used, and when 64 kbps is achieved then a high BLER target is used. The downlink channel uses the same BLER target as the uplink channel. The BLER management ought to be implemented in the RNC and not in the mobile terminal, to make the feature network specific and not terminal specific. An update of the uplink BLER target implies that a QoS message is sent to the terminal. It is optimal to set the same BLER target for the downlink channel as for the uplink channel.

How is it determined if the main data flow is in the downlink or uplink? One possible way is the following: measure the downlink and uplink throughput at a time interval. If the throughput is highest for the downlink then data is downloaded, and if the throughput is highest in the uplink then data is uploaded.

### UMTS - Power control and BLER target

In UMTS there is a closed loop power control and an outer loop power control. The closed loop power control performs frequent SIR estimates and compares it with a SIR target. If the measured SIR is higher than the target, the power is reduced; whereas if it is lower than the target the power is increased. The outer loop power control resides in the RRC at the RNC. It adjusts the SIR target so that a given BLER and/or BER target is satisfied. Hence, the BLER or BER is measured and if the quality is insufficient the SIR target is raised; if the quality is too high the SIR target can be reduced. The reason for varying the SIR target is that the required SIR for a certain BLER target depends on the mobile speed and multi path profile.

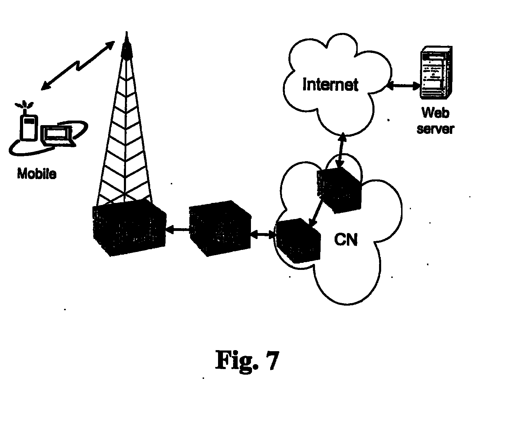

Figure 7 a UMTS network performs closed loop power control at Node B and outer loop power control at the RNC. When a RAB is set up QoS parameters are negotiated in the CN. One of these QoS parameters is the BLER target, which the RNC gets from the CN. In release 99 the BLER target cannot be renegotiated, but in future versions this is possible. The RNC signals BLER target to the mobile terminal and a downlink and uplink radio bearer is set up. For the invention above it is probably most suitable not to renegotiate the choice of the BLER target with the CN, but to let CN "think" that the BLER target is "high" (10%) all the time. So the RAB has a high BLER target, whereas the radio bearer has a variable BLER target.

The present invention here described is primarily contemplated for 3G, but might also be used in EDGE, GPRS and WLAN.

## Claims

1. A method (300, 400, 500, 600) for controlling transmitting power for data transmission in a wireless communication system, **characterised in that** Block Error Ratio (BLER) target management of radio links for Transmission Control Protocol (TCP) traffic is performed by the step:
- to change from a low BLER target to a high BLER target if a maximum bit rate of the radio link has been reached.

2. A method (300, 400) according to claim 1, **characterised in that** the method comprises the steps of:
a- set the Bler target to a low value (304, 404);
b- check whether the average bit rate of TCP traffic is approximately equal to a maximal bit rate (306, 406);
c- if not, then repeat step b;
d- otherwise set the BLER target to a high value (308, 408).

3. A method (300, 400) according to claim 2, where TCP congestion control is activated, **characterised in that** the method comprises the steps of:
- e- if BLER target is set to a high value, then check whether the average bit rate of TCP traffic < α* the maximal bit rate of the radio link,wherein α < 1 (410);
- f- if not, then repeat step e;
- g- otherwise repeat from step a.

4. A method (500, 600) according to claim 1, where TCP congestion control is activated, **characterised in that** the method comprises the steps of:
a- set the bit rate to a low value (504,604);
b- set the BLER target to a low value (306, 406);
c- check whether the average bit rate is approximately equal to the maximal bit rate for the chosen bit rate (508, 608);
d- if not, repeat step c;
e- otherwise switch to a higher maximal bit rate (510, 610) and check whether the highest bit rate has been reached (512, 612);
f- if not, then repeat from step c;
g- otherwise set the BLER target to a high value (516, 614);
h- check whether the average bit rate <α* the maximal bit rate, wherein α < 1 (518, 616);
i- if not, the repeat step h;
j- otherwise set the BLER target to a low value (520, 606) and either repeat from step b or go back to the end of step e when the highest bit rate has been reached.

5. A method (500, 600) according to claim 4, **characterised in that** the method comprises the steps of:
k- after step e, check whether the average bit rate is approximately equal to the maximal bit rate (514);
l- if not, repeat step k;
m- otherwise set the BLER target to a high value (516).

6. A method (300, 400, 500, 600) according to any of the previous claims, **characterised in that** the low BLER target is 1%.

7. A method (300, 400, 500, 600) according to any of the previous claims 1-6, **characterised in that** the high BLER target is 10%.

8. A computer program comprising program steps to perform the program steps according to the claims 1-6.

9. A computer with a readable memory comprising instructions for performing steps according to the method in any of above claims 1-6.

10. A system for controlling transmitting power for data transmission in a wireless communication system, **characterised in that** the system comprises: means for managing the Block Error Ratio target of radio links for transmission control protocol, said means being adapted for changing from a low BLER target to a high BLER target if a maximum bit rate of the radio link has been reached.

## Patentansprüche

1. Verfahren (300, 400, 500, 600) zur Steuern der Sendeleistung für Datenübertragung in einem drahtlosen Kommunikationssystem, **dadurch gekennzeichnet, das** Blockfederverhältnis (BLER, Stock Error Ratio) - Zielverwaltung von Funkverbindungen für Übertragungssteuerungs-Protokoll (TCP, Transmission Control Protocol) - Verkehr durchgeführt wird durch den Schritt:
- von einem niedrigen SLER-Ziel zu einem hohen BLER-Ziel zu wechseln, wenn eine maximale Bitrate der Funkverbindung erreicht worden ist.

2. Verfahren (300, 400) nach Anspruch 1, **dadurch gekennzeichnet, dass** das Verfahren die Schritte aufweist:
a - setze das BLER-Ziel auf einen niedrigen Wert (304, 404) ;
b - prüfe, ob die durchschnittliche Bitrate von TCP-Verkehr ungefähr gleich einer maximalen Bitrate (306, 406) ist;
c - falls nicht, wiederhole Schritt b;
d - sonst setze das BLER-Ziel auf einen hohen Wert (308, 408)

3. Verfahren (300, 400) nach Anspruch 2, bei der TCP-Überlastungskontrolle aktiviert, ist, **dadurch gekennzeichnet, dass** das Verfahren die Schritte aufweist;
- e - wenn das BIER-Ziel auf einen hohen Wert gesetzt ist, dann prüft, ob die durchschnittliche Bitrate des TCP-Verkehrs < α*, der maximalen Bitrate der Funkverbindung ist, wobei α < 1 (410);
- f - wenn nicht, wiederhole Schritt e;
- g - ansonsten wiederhole von Schritt a.

4. Verfahren (500, 600) nach Anspruch 1, bei der TCP-Überlastungskontrolle aktiviert ist, **dadurch gekennzeichnet, dass** das Verfahren die Schritte aufweist:
a - setze die Bitrate auf einen niedrigen Wert (504, 604);
b - setze das BLER-Ziel auf einen niedrigen Wert (306, 406);
c - prüfe, ob die durchschnittliche Bitrate ungefähr gleich der maximalen Bitrate für die ausgewählte Bitrate (508, 608) ist;
d - wenn nicht, wiederhole Schritt c;
e - sonst schafte auf eine höhere maximale Bitrate (510, 610) und überprüfe, ob die höchste Bitrate erreicht worden ist (512, 612);
f - wenn nicht, wiederhole von Schritt c;
g - sonst setze das BLER-Ziel auf einen hohen Wert (516, 614);
h - prüfe, ob die unterschiedliche Bitrate < α*, der maximalen Bitrate ist, wobei α < 1 (518, 616);
i - wenn nicht, wiederhole Schritt h;
j - sonst setze das BLER-Ziel auf einen hohen Wert (520, 606) und wiederhole entweder von Schritt b oder geh zurück zum Ende von Schritt e, wenn die höchste Bitrate erreicht worden ist.

5. Verfahren (500, 600) nach Anspruch 4, **dadurch gekennzeichnet, dass** das Verfahren die Schritte aufweist;
k - nach Schritt e, prüfe ob die durchschnittliche Bitrate ungefähr gleich der maximalen Bitrate (514) ist;
i - wenn nicht, wiederhole Schritte k;
m - sonst setze das BLER-Ziel auf einen hohen Wert (516).

6. Verfahren (300, 400, 500, 600) nach einem der vorangehenden Ansprüche, **dadurch gekennzeichnet, dass** das niedrige BLER-Ziel 1% ist.

7. Verfahren (300, 400, 500, 600) nach einem der vorangehenden Ansprüche 1 bis 6, **dadurch gekennzeichnet, dass** das hohe BLER-Ziel 10% ist.

8. Computerprogramm, das Proqrammschritte aufweist, um die Programmschritte gemäß den Ansprüchen 1 bis 6 auszuführen.

9. Computer mit einem lesbaren Speicher, der Anweisungen zum Ausrühren von Schritten gemäß dem Verfahren einer der Ansprüche 1 bis 6 aufweist.

10. System zum Steuern von Sendeleitung für Datenübertragung in einem drahtlosen Kommunikationssystem, **dadurch gekennzeichnet, dass** das System Mittel zum Verwalten des Blockfehlerverhältnisziels von Funkverbindungen für Übertragungssteuerprotokoll aufweist, welche Mittel ausgebildet sind, von einem niedrigen BLER-Ziel zu einem hohen BLER-Ziel zu wechseln, wenn eine maximale Bitrate der Funkverbindung erreicht worden ist.

## Revendications

1. Procédé (300, 400, 500, 600) de commande de puissance de transmission lors de la transmission de données sur un système de communication sans fil, **caractérisé en ce que** la gestion du Rapport d'Erreur de Bloc (BLER) cible de liaisons radio pour un trafic suivant le Protocole de Commande de Transmission (TCP) est réalisée par l'étape :
de passage d'un rapport BLER cible faible à un rapport BLER cible élevé si un taux de transfert binaire maximum de la liaison radio a été atteint.

2. Procédé (300, 400) selon la revendication 1, **caractérisé en ce que** le procédé comprend les étapes de :
a- positionnement du rapport BLER cible à une valeur faible (304, 404) ;
b- contrôle du fait que le taux de transfert binaire moyen de trafic TCP est approximativement égal au taux de transfert binaire maximum (306, 406) ;
c- si ce n'est pas le cas, alors répétition de l'étape b ;
d- sinon, positionnement du rapport BLER cible à une valeur élevée (308, 408).

3. Procédé (300, 400) selon la revendication 2, dans lequel la commande de congestion de TCP est activée, **caractérisé en ce que** le procédé comprend les étapes de :
e- si le rapport BLER cible est positionné à une valeur élevée, alors contrôle du fait que le taux de transfert binaire moyen de trafic TCP < α*; le taux de transfert binaire maximal de la liaison radio, dans lequel α < 1 (410) ;
f- si ce n'est pas le cas, alors répétition de l'étape e ;
g- sinon répétition à partir de l'étape a.

4. Procédé (500, 600) selon la revendication 1, dans lequel la commande de congestion de TCP est activée, **caractérisé en ce que** le procédé comprend les étapes de :
a- positionnement du taux de transfert binaire à une valeur faible (504, 604) ;
b- positionnement du rapport BLER cible à une valeur faible (306, 406) ;
c- contrôle du fait que le taux de transfert binaire moyen est appproximativement égal au taux de transfert binaire maximum pour le taux de transfert binaire choisi (508, 608);
d- si ce n'est pas le cas, répétition de l'étape c ;
e- sinon commutation à un taux de transfert binaire maximum plus élevé (510, 610) et contrôle du fait que le taux de transfert binaire le plus élevé a été atteint (512, 612) ;
f- si ce n'est pas le cas, répétition à partir de l'étape c ;
g- sinon positionnement du rapport BLER cible à une valeur élevée (516, 614) ;
h- contrôle du fait que le taux de transfert binaire < α*, le taux de transfert binaire maximal où α < 1 (518, 616) ;
i- si ce n'est pas le cas, répétition de l'étape h ;
j- sinon, positionnement du rapport BLER cible à une valeur faible (520, 606) et soit répétition à partir de l'étape b soit retour à la fin de l'étape e lorsque le taux de transfert binaire le plus élevé a été atteint.

5. Procédé (500, 600) selon la revendication 4, **caractérisé en ce que** le procédé comprend les étapes de :
k- après l'étape e, contrôle du fait que le taux de transfert binaire moyen est approximativement égal au taux de transfert binaire maximal (514);
l- si ce n'est pas le cas, répétition de l'étape k ;
m- sinon, positionnement du rapport BLER cible à une valeur élevée (516).

6. Procédé (300, 400, 500, 600) selon l'une quelconque des revendications précédentes, **caractérisé en ce que** le rapport BLER cible faible est égal à 1 %

7. Procédé (300, 400, 500, 600) selon l'une quelconque des revendications 1 à 6 précédentes, **caractérisé en ce que** le rapport cible BLER élevé est égal à 10 %.

8. Programme informatique comprenant des étapes programmées destinées à exécuter les étapes de programme selon les revendications 1 à 6.

9. Ordinateur avec une mémoire pouvant être lue comprenant des instructions destinées à exécuter des étapes du procédé selon l'une quelconque des revendications 1 à 6 précédentes.

10. Dispositif de commande de puissance de transmission afin d'assurer la transmission de données dans un système de communication sans fil, **caractérisé en ce que** le dispositif comprend : des moyens de gestion du rapport d'erreur de bloc cible de liaisons radio pour le protocole de commande de transmission, lesdits moyens étant adaptés de manière à passer d'un rapport BLER cible faible à un rapport BLER cible élevé si un taux de transfert binaire maximum de la liaison radio a été atteint.
